(19) Europäisches Patentamt

European Patent Office

Office européen des brevets

(11) **EP 2 793 343 A1**

(12) **EUROPEAN PATENT APPLICATION**

(43) Date of publication:
**22.10.2014 Bulletin 2014/43**

(51) Int Cl.:
*H02J 3/16* (2006.01)    *H02J 3/38* (2006.01)

(21) Application number: **13163923.9**

(22) Date of filing: **16.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft 80333 München (DE)**

(72) Inventor: **Yin, Bo 7330 Brande (DK)**

(54) **Coordinating voltage controllers within a wind park being connected to a utility grid**

(57)    It is described a method for coordinating voltage controllers within a wind park (100) being connected to a utility grid (190) and comprising (i) a plurality of wind turbines (180) and (ii) different types of controllers (110, 120, 130, 140) which are assigned to different voltage levels within the wind park (100). The described method comprises (a) estimating a strength of the utility grid (190) by means of a first controller (110), (b) forwarding the estimated strength of the utility grid (190) from the first controller (110) to a second controller (120), and (c) adjusting a control gain of the second controller (120) based on the forwarded estimated strength of the utility grid (190). It is further described a controller system and a computer program both being configured for controlling and/or for carrying out the described voltage controller coordinating method.

FIG 1

EP 2 793 343 A1

**Description**

<u>Field of invention</u>

The present invention relates to the technical field of operating a large wind park which comprises a plurality of wind turbines. In particular, the present invention relates to a method for coordinating voltage controllers within a wind park being connected to a utility grid and comprising (a) a plurality of wind turbines and (b) different types of controllers which are assigned to different voltage levels within the wind park. Further, the present invention relates to a controller system and to a computer program both being configured for controlling and/or for carrying out the described voltage controller coordinating method.

<u>Art Background</u>

When a wind turbine and in particular a plurality of wind turbines deliver electrical power to a utility grid, several grid requirements in relation to transient voltage responses have to be fulfilled. Such grid requirements are typically specified by the operator of the utility grid.

For example grid requirements in the United Kingdom dictate that when a reactive power reference value or a voltage reference value is stepped, after at the latest 1 second the reactive power has to be at least at 90% of its steady state value. Further, after at the latest 2 seconds possibly remaining oscillations should be less than 5% peak to peak of the change in reactive power at this time.

In order to comply with such grid requirements the operation of a wind park has to be controlled in a sophisticated manner. Specifically, different controllers are used which are assigned to different points and in particular which are assigned to different voltage levels within a wind park.

One known concept for controlling the operation of a wind farm employs four different types of controllers. A first type of controller, which is a very fast response controller, controls the voltage level at a bus bar being closest to the utility grid. Thereby, an upstream dynamic voltage control is performed. This bus bar is also called Point of Common Coupling (PCC). A second type of controller, which is also called wind park controller, controls in a coordinated manner the operation of the plurality of wind turbines. Thereby, a medium speed wind park reactive power or voltage control or power factor is performed. A third type of controller, which is also called very slow speed controller such as On-Load Transformed tap Changer (OLTC) controller, controls a wind park transformer, or a capacitor bank controller, or a reactor controller. Thereby, a slow speed voltage regulation at the Low Voltage side of the wind park transformer is performed. A fourth type of controller is a Wind Turbine (WT) controller. Such a controller, which is assigned to each wind turbine of the wind park, performs a voltage control at the Low Voltage side of the respective wind turbine transformer.

As there are altogether four different types of controllers all of which control voltage, power factor and reactive power at the different points within wind farm and towards the PCC, an interaction among three controllers should be addressed. Below is a brief description of overall voltage control philosophy.

(A) Very fast response or controller:

The very fast response controller which might be realized by a so called Static Voltage Compensation (SVC) controller controls the operation of a so called SVC converter which provides injection or absorption of reactive power continuously and when required. In order to extend its capability, the SVC controller switches in and out Mechanically Switched Reactors (MSR) or Mechanically Switched Capacitors (MSC).

The SVC controller has a grid estimator unit, which estimates the strength of the utility grid. In this context, a strong utility grid experiences a high Short Circuit Ratio (SCR). Correspondingly, a weak utility grid has a small SCR. Based on an estimated SCR value and a slope setting, the SVC controller automatically adjusts its gain factors so that the same response can be delivered to fulfill the requirement of the grid code at the PCC based on the voltage and slope settings.

(B) Wind farm controller:

The wind farm controller can be realized with the three options (a) voltage controller, (b) reactive power controller and (c) power factor controller. In the following it will be assumed that the wind farm controller is a reactive power controller as an example. The set point of the wind farm controller can be set to a constant value. Alternatively, the above mentioned fast response controller, e.g. SVC controller can dispatch instruction to wind farm controller such as reactive power set point or voltage set point or power factor setpoint.

(C) Very slow response controller, such as OLTC controller: The OLTC controller is designed to control the voltage of the Low Voltage side of the wind park transformer within a range of e.g. 0.99 per unit (pu) to 1.01 pu. The OLTC controller is not directly linked to the control system of the SVC controller and the wind farm controller and acts independently.

(D) WT controller:

The wind turbine controller controls the operation of an individual wind turbine of the plurality of wind turbines. The WTC controller receives its instructions from the wind farm controller or it can run with local set point.

As has already been mentioned above, the operation of these (types of) controllers, which are arranged in a cascaded manner within the wind park, should be coordinated. As described in the above, there might be no direct link or direct interaction between SVC controller, wind farm controller and OLTC controller. However, the interaction among these controllers still exists due to the fact that all these controllers monitor voltage or reactive power along the same power transmission line or radial line towards the PCC.

Specifically, the response times of the above mentioned four controllers should be coordinated. Thereby, the (voltage controller of the) SVC controller should have the fastest response, the (voltage controller of the) WT controller should have the second fastest response, the (reactive power controller of the) wind farm should have the third fastest response and the (voltage controller of the) OLTC controller should have the slowest response. This comparison between the response times yields the following rule for the relationship between the bandwidths (BW) of the four types of controllers:

$$BW_{SVC} \; > \; BW_{WT} \; > \; BW_{WF} \; > \; BW_{OLTC} \qquad\qquad (1)$$

However, as a voltage gain factor for a controller is a function of the strength of the utility grid, it would be preferably that the above mentioned voltage/reactive power/power factor controllers will automatically adjust their voltage gain factor according to the estimated strength of the utility grid respectively according to the estimated SCR.

With the adjusted gain factor, the same response or a similar bandwidth of the voltage controller can be maintained. As a result, the utility grid code requirements will be fulfilled in spite of a change of the grid strength.

However, not all of the gain factors of the above mentioned controllers are adjusting its gain factors according to grid strength. For example, the very fast voltage controller has been equipped with automatic gain adjustment function according to obtained grid strength which might be from Transmission System Operator (TSO), or obtained by online grid estimator or offline estimator, and etc. However, the rest of controllers, such as the wind farm controller and the WT controller, are not adjusted according to the change in grid strength. The bandwidth of the wind farm controller, as an example, might increase significantly when utility grid becomes weakened. In this case, the bandwidth of the wind farm controller might be larger than the bandwidth of SVC controller. As a consequence, above given equation (1) will not be satisfied any more. This can seriously affect the voltage control stability and can result in an unwanted voltage oscillation within the wind park.

There may be a need for providing a concept for controlling the operation of a wind park wherein even in case of changes of the strength of the utility grid a stable voltage control can be ensured and unwanted voltage oscillation within the wind park can be avoided.

Summary of the Invention

This need may be met by the subject matter according to the independent claims. Advantageous embodiments of the present invention are described by the dependent claims.

According to a first aspect of the invention there is provided a method for coordinating voltage controllers within a wind park being connected to a utility grid and comprising (i) a plurality of wind turbines and (ii) different types of controllers which are assigned to different voltage levels within the wind park. The provided method comprises (a) obtaining a strength of the utility grid, (b) forwarding the obtained strength of the utility grid to at least a first controller and a second controller, and (c) adjusting a control gain of the at least two controllers based on the forwarded estimated strength of the utility grid.

The described method is based on the idea that a coordinated voltage control within a wind park or a wind farm can be realized in a simple and effective manner when the information regarding the actual strength of the utility grid is not only used by the first controller, but is broadcasted also at least to a second type of controller of the wind park.

In this respect it is mentioned that the weaker the utility grid is, i.e. the smaller the actual SCR of the utility grid is, the less active power is transferable from the wind park to the utility grid. Correspondingly, the stronger the utility grid is, i.e. the larger the actual SCR of the utility grid is, the more active power is transferable from the wind park to the utility grid.

Adjusting the control gain of the at least two controllers in response to the obtained strength of the utility grid may provide the advantage that a coordinated voltage control is accomplished such that voltage oscillations within or of the wind park can be avoided. Thereby, even very strict utility grid requirements can be easily fulfilled.

In other words, by adjusting the control gain for different types of controllers in a coordinated manned based on obtained actual grid strength values, a stable operation of large scale wind parks can be achieved. Thereby, unwanted voltage oscillations, wind turbine tripping or even a final shutting down of the whole wind park by an operator of the utility grid can be avoided. Further, a similar transient voltage response as specified by the operator of the utility grid can be achieved even in the case of variations of the strength of the utility grid.

Further advantages of the coordinated control gain adjustment described in this document are (a) an enhancement of the voltage control stability in sprite of grid strength variations, (b) a consistent performance for different strength of the utility grid, (c) an improved robustness against grid disturbances, (d) a better compliance with grid code requirements, and (e) no need for additional hardware components which means no additional costs for implementing the described coordinated control gain adjustment method.

According to an embodiment of the invention the method further comprises (a) forwarding the obtained strength of the utility grid to a third controller, and (b) adjusting a control gain of the third controller based on the forwarded obtained strength of the utility grid. This may provide the advantage that the coordinated control gain adjustment will not only affect two, i.e. the first and the second controller, but also a third (type of) controller. Thereby, the voltage control stability in particular within a large scale wind park can be further improved.

According to a further embodiment of the invention the method further comprises (a) forwarding the estimated strength of the utility grid to at least one fourth controller, and (b) adjusting a control gain of the at least one fourth controller based on the forwarded obtained strength of the utility grid.

By performing a coordinated control gain adjustment among four different (types of) controllers voltage control stability in particular within a large scale wind park can be even further improved.

According to a further embodiment of the invention (a) the first controller is assigned to a Point of Common Coupling of the wind park, (b) the second controller is a controller which is communicatively coupled to a plurality of controllers each being assigned to one of the plurality of wind turbines of the wind park, (c) the third controller is assigned to a wind park transformer, and (d) the at least one fourth controller is at least one of the plurality of controllers each being assigned to one of the plurality of wind turbines.

Specifically, in the language used in the Art Background section of this document the first controller may be a very fast response controller such as e.g. a Static Voltage Compensation (SVC) controller. Further, the second controller may be a so called wind farm controller, which controls in a coordinated manner the operation of the plurality of individual wind turbines of the wind park. Further, the third controller may be the On-Load Transformed tap Changer (OLTC) controller, which controls the operation respectively actual transformation ratio of the wind park transformer. Furthermore, the at least one fourth controller may be a so called Wind Turbine (WT) controller, which is assigned to each wind turbine of the wind park and which in a known manner performs a voltage control at the Low Voltage side of the respective wind turbine transformer.

According to a further embodiment of the invention obtaining the strength of the utility grid comprises estimating the strength of the utility grid by means of the first controller. This means that the first controller comprises a capability to estimate the strength of the utility grid.

According to a further embodiment of the invention obtaining the strength of the utility grid comprises estimating the strength of the utility grid by means of the second controller. This means that in this case the second controller comprises a capability to estimate the strength of the utility grid.

According to a further embodiment of the invention obtaining the strength of the utility grid comprises receiving the strength of the utility grid from an external entity. The external source may be any unit or node within the electric network comprising inter alia the utility grid and the plurality of wind turbines which is capable of measuring and/or estimating the actual strength of the utility grid.

According to a further embodiment of the invention estimating or receiving the strength of the utility grid is accomplished cyclically.

Since every utility grid estimation may cause disturbances to the utility grid, a grid estimation may only be accomplished when it is necessary or at time intervals which are not too short. A cyclical utility grid estimation may be carried out e.g. every 12 hours or every one hour.

According to a further embodiment of the invention adjusting the control gain of the respective controller is carried out on the basis of a lookup table or based on an adaptive control law. Thereby, in each respective controller, a standard value for the integrator time constant of a voltage Proportional/Integral (PI) controller can be defined. The lookup table could be created for the proportional gain as a function of the utility grid strength respectively as a function of the SCR of the utility grid and/or as a function of slope/droop gain in case such a slope/droop gain is present. The control gain of the controllers receiving the forwarded estimated strength of the utility grid will be adjusted by searching in the lookup table based on the estimated SCR. In this way, a proper voltage coordination within the wind park can be ensured.

Further, it can be ensured that above given equation (1) relating to the bandwidths of the involved controllers can be satisfied. Thus, a stable operation of a large scale wind farm can be obtained.

According to a further aspect of the invention there is provided a controller system for coordinating voltage controllers within a wind park being connected to a utility grid and comprising a plurality of wind turbines. The provided controller system comprises different types of controllers which are assigned to different voltage levels within the wind park. The controller system is configured for controlling and/or for carrying out the method as described above for coordinating voltage levels within a wind park.

According to a further aspect of the invention there is provided a computer program for coordinating voltage controllers within a wind park being connected to a utility grid and comprising (i) a plurality of wind turbines and (ii) different types of controllers which are assigned to different voltage levels within the wind park. The provided computer program, when being executed by a data processor, is adapted for controlling and/or for carrying out the method as described above for coordinating voltage levels within a wind park.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters.

In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawing

Figure 1 shows a control architecture for a wind park, which control architecture comprises four different types of controllers which are assigned to different voltage levels within the wind park.

Figure 2 shows a block diagram for four level cascaded voltage controllers.

Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

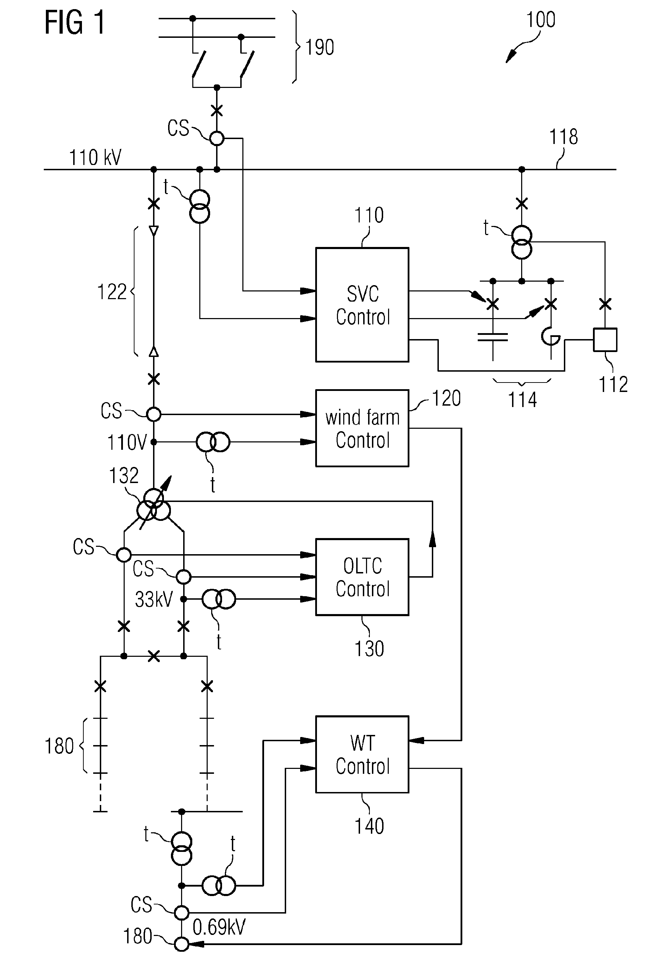

Figure 1 shows a control architecture for a wind park 100, which control architecture comprises four different types of controllers, a first controller 110, a second controller 120, a third controller 130 and a fourth controller 140. In Figure 1, circuit breakers are indicated with "x", a current sensor is designated with reference numeral cs and a voltage sensor is designated with reference numeral t.

The wind park 100 comprises a bus bar 118 which represents the Point of Common Coupling (PCC). All the electric power being generated by the plurality of wind turbines 180 of the wind park 100 is brought together at the PCC 118. As can be seen from Figure 1, the electric power being generated by the plurality of wind turbines 180 and being brought together at the PCC 118 is delivered to a utility grid 190. For safety reasons, a circuit breaker x is connected between the utility grid 190 and the PCC 118. For transferring the generated electric power to the PCC 118 a power transmission cable 122 is provided.

According to the embodiment described here the first controller 110 is a so called Static Voltage Compensation (SVC) controller which in a known manner is responsible for controlling the voltage at the PCC 118. The SVC controller 110 comprises a grid estimation unit for estimating an actual strength of the utility grid 190 respectively an actual Short Circuit Ratio (SCR) of the utility grid 190. Assigned to the SVC controller 110 there is provided in a known manner a capacitor / inductor bank 114 and a switch device 112. According to the embodiment described here the PCC 118 is at a voltage level of 110 kV.

The second controller 120 is a controller of the wind park 100. According to the embodiment described here the second controller is a so called wind farm controller 120. According to the embodiment described here the wind farm controller 120 receives its input signals from a voltage level of 110 kV. The wind farm controller 120 controls in a well known and coordinated manner a plurality of fourth controllers 140 each being responsible for controlling the operation of one individual wind turbine 180. For the sake of clarity of the illustration in Figure 1 there is depicted only one fourth controller 140.

The third controller 130 is a so called On-Load Transformed tap Changer (OLTC) controller. The OLTC controller 130 is responsible for controlling the transmission ratio of an adjustable transformer 132. According to the embodiment described here the OLTC controller 130 receives its input signals from a voltage level of 33 kV.

The fourth controller 140 is a so called Wind Turbine (WT) controller. The WT controller 140 is responsible for controlling, in response to a coordination signal received from the wind farm controller 120, the individual operation of the respective wind turbine 180. According to the embodiment described here the WT controller 140 receives its input signals from a voltage level of 0.69 kV.

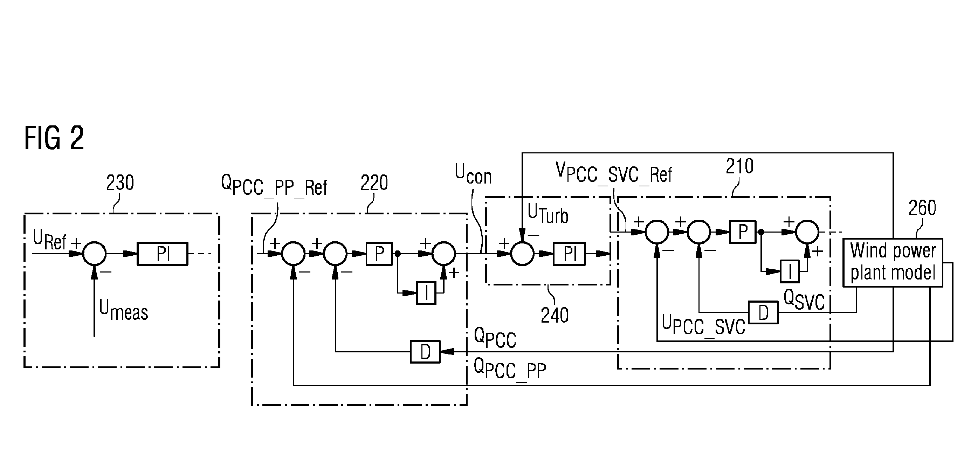

Figure 2 shows a block diagram for four level cascaded voltage controllers. The entire controller structure comprises a first / an SVC controller 210, a fourth / WT controller 240, a second / wind farm controller 220 and a third / OLTC controller 230. In the cascaded controller structure the third / OLTC controller 230 represents the first outer loop, the second / wind farm controller 220 represents the second outer loop, the fourth / WT controller 240 represents the third outer loop and the first / an SVC controller 210 represents the inner loop.

As can be seen from Figure 2, the third / OLTC controller 230 is a PI controller, wherein the control signal is the difference between a reference voltage Uref and a measured voltage Umeas.

According to the embodiment described here the second / wind farm controller 220 is a PID controller controlling the reactive power. Here, the control signal is the difference between the reactive power $Q_{PCC\_PP}$ at the PCC and a reference signal $Q_{PCC\_PP\_Ref}$ for the reactive power at the PCC.

In accordance with Figure 1, the output signal of the second / wind farm controller 220, which is a voltage signal Ucon, is fed into the fourth / WT controller 240. According to the embodiment described here the fourth / WT controller 240 is a PI controller

In the fourth / WT controller 240 the control signal is the difference between the voltage signal Ucon and a voltage signal $U_{Turb}$ which represents the actual voltage provided by the respective wind turbine. As can be seen from Figure 2, the fourth / WT controller 240 is a PI controller.

In the first / SVC controller 210 the control signal is the difference between the Voltage $U_{PCC\_SVC}$ at the PCC and a reference value $U_{PCC\_SVC\_Ref}$ for the voltage at the PCC. The first / SVC controller 210 is a PID controller. The derivative (D) branch receives an input $Q_{SVC}$ from a processing unit 260 which, on the basis of a computer model for the wind park respectively the wind power plant provides also the signals $U_{Turb}$, $U_{PCC\_SVC}$, $Q_{PCC\_PP}$, and $Q_{PCC}$.

In accordance with the basic concept of the invention a value representing the Short Circuit Ratio (SCR) of the utility grid respectively the strength of the utility grid is broadcasted by the first / SVC controller 210 (a) to the second / wind farm controller 220, (b) to the fourth / WT controller 240, and (c) to the third / OLTC controller 230.

The value representing the SCR respectively the grid strength is estimated cyclically, e.g. every 12 hours, by the first / SVC controller 210. Based on this estimated value a parameter coordination for the respective gain parameters among the fourth / WT controller 240, the second / wind farm controller 220, the first / SVC controller 210 and the third / OLTC controller 230 is carried out.

In each controller 210, 220, 230 and 240 a standard value for the integrator time constant of the voltage PI controller can be defined. A lookup table could be created for the proportional gain as a function of the actual SCR and/or the slope/droop gain if there is a slope / droop gain.

The control gain of the above mentioned three controllers will be adjusted by searching in the lookup table based on the estimated SCR. In this way, the voltage coordination can be ensured and above given equation (1) can be satisfied. Thus, a stable operation of large scale wind farm can be obtained.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

**Claims**

1. A method for coordinating voltage controllers within a wind park (100) being connected to a utility grid (190) and comprising (i) a plurality of wind turbines (180) and (ii) different types of controllers (110, 120, 130, 140) which are assigned to different voltage levels within the wind park (100), the method comprising
   obtaining a strength of the utility grid (190),
   forwarding the obtained strength of the utility grid (190) to at least a first controller (110) and a second controller (120), and
   adjusting a control gain of the at least two controllers (110, 120) based on the forwarded estimated strength of the utility grid (190).

2. The method as set forth in the preceding claim, further comprising
   forwarding the obtained strength of the utility grid (190) to a third controller (130), and
   adjusting a control gain of the third controller (130) based on the forwarded obtained strength of the utility grid (190).

3. The method as set forth in the preceding claim, further comprising
   forwarding the estimated strength of the utility grid (190) to at least one fourth controller (140), and
   adjusting a control gain of the at least one fourth controller (140) based on the forwarded obtained strength of the utility grid (190).

4. The method as set forth in the preceding claim, wherein
   the first controller (110) is assigned to a Point of Common Coupling of the wind park,
   the second controller (120) is a controller which is communicatively coupled to a plurality of controllers each being assigned to one of the plurality of wind turbines (180) of the wind park (100),
   the third controller (130) is assigned to a wind park transformer (132), and
   the at least one fourth controller (140) is at least one of the plurality of controllers each being assigned to one of the plurality of wind turbines (180).

5. The method as set forth in any one of the preceding claims 1 to 4, wherein
   obtaining the strength of the utility grid (190) comprises
   estimating the strength of the utility grid (190) by means of the first controller (110).

6. The method as set forth in any one of the preceding claims 1 to 4, wherein
   obtaining the strength of the utility grid (190) comprises
   estimating the strength of the utility grid (190) by means of the second controller (120).

7. The method as set forth in any one of the preceding claims 1 to 4, wherein
   obtaining the strength of the utility grid (190) comprises
   receiving the strength of the utility grid (190) from an external entity.

8. The method as set forth in any one of the preceding claims 5, 6 and 7, wherein
   estimating or receiving the strength of the utility grid (190) is accomplished cyclically.

9. The method as set forth in any one of the preceding claims, wherein
   adjusting the control gain of the respective controller (110, 120, 130, 140) is carried out on the basis of a lookup table or based on an adaptive control law.

10. A controller system for coordinating voltage controllers within a wind park (100) being connected to a utility grid (190) and comprising a plurality of wind turbines (180), the controller system comprising
    different types of controllers (110, 120, 130, 140) which are assigned to different voltage levels within the wind park (100), wherein the controller system is configured for controlling and/or for carrying out the method as set forth in any one of the claims 1 to 8.

11. A computer program for coordinating voltage controllers within a wind park (100) being connected to a utility grid (190) and comprising (i) a plurality of wind turbines (180) and (ii) different types of controllers (110, 120, 130, 140) which are assigned to different voltage levels within the wind park (100), the computer program, when being executed by a data processor, is adapted for controlling and/or for carrying out the method as set forth in any one of the claims 1 to 8.

# FIG 1

FIG 2

Europäisches
Patentamt

European
Patent Office

Office européen
des brevets

# EUROPEAN SEARCH REPORT

Application Number

EP 13 16 3923

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/044923 A1 (VESTAS WIND SYS AS [DK]) 4 April 2013 (2013-04-04) | 1-7,9-11 | INV. H02J3/16 H02J3/38 |
| Y | * page 11 - page 12; figures 1,2 * | 8 | |
| Y | US 2011/043186 A1 (BECH JOHN [DK] ET AL) 24 February 2011 (2011-02-24) * paragraphs [0021], [0042], [0051]; figures 1,2 * | 8 | |
| E | EP 2 605 356 A1 (SIEMENS AG [DE]) 19 June 2013 (2013-06-19) * paragraphs [0015], [0039] - [0041] * | 1,10 | |
| A | US 2007/055408 A1 (DELMERICO ROBERT W [US] ET AL DELMERICO ROBERT WILLIAM [US] ET AL) 8 March 2007 (2007-03-08) * paragraphs [0027] - [0028]; figure 1 * | 1,10 | |

TECHNICAL FIELDS
SEARCHED (IPC)

H02J
F03D

The present search report has been drawn up for all claims

| Place of search | Date of completion of the search | Examiner |
|---|---|---|
| Munich | 25 September 2013 | Colombo, Alessandro |

EPO FORM 1503 03.82 (P04C01)

**ANNEX TO THE EUROPEAN SEARCH REPORT
ON EUROPEAN PATENT APPLICATION NO.**

EP 13 16 3923

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2013

| Patent document cited in search report | | Publication date | Patent family member(s) | | Publication date |
|---|---|---|---|---|---|
| WO 2013044923 | A1 | 04-04-2013 | NONE | | |
| US 2011043186 | A1 | 24-02-2011 | AU | 2008342717 A1 | 09-07-2009 |
| | | | CN | 101911424 A | 08-12-2010 |
| | | | EP | 2227847 A2 | 15-09-2010 |
| | | | US | 2011043186 A1 | 24-02-2011 |
| | | | WO | 2009083448 A2 | 09-07-2009 |
| EP 2605356 | A1 | 19-06-2013 | NONE | | |
| US 2007055408 | A1 | 08-03-2007 | NONE | | |

EPO FORM P0459

For more details about this annex : see Official Journal of the European Patent Office, No. 12/82